# EUROPEAN PATENT APPLICATION

(11) **EP 4 675 595 A1**
(43) Date of publication of application: **07.01.2026**
(21) Application number: 24186305.9
(22) Date of filing: 03.07.2024
(51) Int. Cl.: G09B 5/12, G09B 7/00, G06Q 10/0631, G06Q 50/20

(54) **METHODS AND SYSTEMS FOR PLANNING COMPREHENSIVE LESSONS**

(71) Applicant: Developing Experts Limited, Norwich NR2 1DP (GB)
(72) Inventor: Morgan, Shane, Norwich, NR2 1DP (GB)
(74) Representative: Basck Limited

(57) **Abstract**

There is disclosed a method for Artificial Intelligence (AI)-driven educational lesson generation, method comprising: receiving first input from first user device (UD) (202), wherein lesson is to be created based on first input; interpreting first input using natural language processing (NPL) algorithm(s) to identify lesson objective(s) and curriculum to which lesson should align; mapping lesson objective(s) with reference standard of curriculum that is pre-stored at first data repository (208); generating lesson plans which satisfy lesson objective(s) and align with reference standard of the curriculum, using AI model(s); receiving first feedback pertaining to at least selection of lesson plan from amongst lesson plans, from first UD; generating lesson content for lesson plan that is selected, using AI model(s); receiving second feedback pertaining to lesson from first UD; and finalizing lesson for delivery to second UD(s) (204), based on second feedback.

## Description

### TECHNICAL FIELD

The present disclosure relates to methods for planning comprehensive lessons. Moreover, the present disclosure relates to computer program products for implementing aforesaid methods for planning comprehensive lessons. Furthermore, the present disclosure relates to systems for planning comprehensive lessons.

### BACKGROUND

Nowadays, educational technology has significantly transformed contemporary educational practices. The educational technology encompasses a range of digital tools and resources, which facilitates personalized and dynamic learning experience. The educational technology is useful in automating repetitive administrative tasks, thus freeing an educator's time to focus on teaching a given student. Moreover, lessons that are high in quality and engaging are crucial for learning and/or retention of the student.

However, existing equipment and techniques of implementing the education technology has its challenges. Firstly, the educators spend a considerable time while preparing lessons that align with a national curriculum. However, such lessons are prepared using standard non-engaging and non-interactive resources, such as textbooks, educational standard documents, supplementary materials, and similar conventional teaching resources. Herein, learning outcomes using such standard non-engaging and non-interactive resources may potentially not be as expected. Moreover, lesson content comprised in a given lesson has limited diversity, as the educators are unable to incorporate extensive background information resources, multimedia content, and similar.

Hence, an efficacy of learning from said given lesson is limited. Secondly, there is inconsistency in a quality of the given lesson due to variability in educational resources and teaching methods used by individual educators. Such inconsistencies lead to inconsistent educational outcomes. Thirdly, current tools that offer digital resources and interactive elements require significant manual effort to align with the standards of the national curriculum. As a result, such resources are presently used separately and only sparingly in addition to the lesson plan of the educator. Fourthly, there is a barrier for educators that are technologically-challenged to integrate complex digital tools into their teaching practices effectively.

Therefore, in light of the foregoing discussion, there exists a need to overcome the aforementioned drawbacks.

### SUMMARY

The aim of the present disclosure is to provide methods and systems for planning comprehensive lessons to provide consistent educational experience. The aim of the present disclosure is achieved by a method and a system for planning comprehensive lessons as defined in the appended independent claims to which reference is made. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is an illustration of a flow chart including steps of a method for (namely, a method of) Artificial Intelligence (AI)-driven educational lesson generation, according to an embodiment of the present disclosure; and
FIG. 2 is an illustration of a block diagram of a system for Artificial Intelligence (AI)-driven educational lesson generation, according to an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a method for Artificial Intelligence (AI)-driven educational lesson generation, the method comprising:
receiving a first input from a first user device, wherein a lesson is to be created based on the first input;
interpreting the first input using at least one natural language processing (NPL) algorithm to identify at least one lesson objective and a curriculum to which the lesson should align;
mapping the at least one lesson objective with a reference standard of the curriculum that is pre-stored at a first data repository, wherein the data repository has pre-stored thereat a plurality of reference curriculum standards of at least one curriculum;
generating a plurality of lesson plans which satisfy the at least one lesson objective and align with the reference standard of the curriculum, using at least one AI model;
receiving a first feedback pertaining to at least a selection of a lesson plan from amongst the plurality of lesson plans, from the first user device;
generating a lesson content for the lesson plan that is selected, using the at least one AI model, wherein the lesson content and the lesson plan collectively constitute the lesson;
receiving a second feedback pertaining to the lesson from the first user device, wherein the second feedback pertains to one of: an approval of the lesson, or an edit required in the lesson; and
finalizing the lesson for delivery to at least one second user device, based on the second feedback.

In a second aspect, the present disclosure provides a computer program product comprising a non-transitory machine-readable data storage medium having stored thereon program instructions that, when accessed by a processing device, cause the processing device to execute steps of a method of the first aspect.

In a third aspect, the present disclosure provides a system for implementing Artificial Intelligence (AI)-driven educational lesson generation, the system comprising at least one processor communicably coupled to a first user device, at least one second user device, and a data repository, wherein the at least one processor is configured to:
receive a first input from a first user device, wherein a lesson is to be created based on the first input;
interpret the first input using at least one natural language processing (NPL) algorithm to identify at least one lesson objective and a curriculum to which the lesson should align;
map the at least one lesson objective with a reference standard of the curriculum that is pre-stored at a first data repository, wherein the data repository has pre-stored thereat a plurality of reference curriculum standards of at least one curriculum;
generate a plurality of lesson plans which satisfy the at least one lesson objective and align with the reference standard of the curriculum, using at least one AI model;
receive a first feedback pertaining to at least a selection of a lesson plan from amongst the plurality of lesson plans, from the first user device;
generate a lesson content for the lesson plan that is selected, using the at least one AI model, wherein the lesson content and the lesson plan collectively constitute the lesson;
receive a second feedback pertaining to the lesson from the first user device, wherein the second feedback pertains to one of: an approval of the lesson, or an edit required in the lesson; and
finalize the lesson for delivery to at least one second user device, based on the second feedback.

The present disclosure provides the aforementioned first aspect and the aforementioned second aspect to create a comprehensive and a customized lesson. The generation of the lesson content is streamlined with the use of the at least one AI model, thereby ensuring consistent educational outcomes. Moreover, a user associated with the first user device spends less time while preparing the lessons as said lessons are generated in a manner that they are aligned with the at least one lesson objective and the curriculum. The NLP algorithm is used to interpret the first input and operationalize the curriculum in a way that it is responsive in an intuitive manner to the first input provided at the first user device. The lesson content is generated automatically with a reduced amount of inputs, for example minimal inputs, from the first user device, which ensures time-effectiveness. The lesson content that is generated is diverse in nature, as extensive background information resources, multimedia content, and similar may be incorporated to make the lesson content information-rich. This lesson content creates a cohesive and engaging learning experience and is customized based on the requirements of the curriculum and the at least one lesson objective. This reduces a manual workload, and elevates educational experience. In this way, the method and the system facilitate a user-friendly, simple and effective way to elevate the educational experience.

Throughout the present disclosure, the term "Artificial Intelligence (AI)-driven educational lesson generation" refers to automation of creating detailed, curriculum-aligned lessons based on the first input. Such AI-driven educational lesson generation leverages algorithms to generate comprehensive, customized educational lessons tailored to national curriculum standards. This AI-driven educational lesson generation is designed to understand educational content requirements and produce thorough lesson plans, significantly reducing a manual workload of educators.

Throughout the present disclosure, the term "*user device*" refers to an electronic device associated with (or used by) a user (for example, such as a teacher, a teaching assistant, or similar) that is capable of enabling the user to perform specific tasks associated with the aforementioned method. Furthermore, the user device is intended to be broadly interpreted to include any electronic device that may be used for voice and/or data communication over a wireless communication network. Examples of the user device include, but are not limited to, cellular phones, personal digital assistants (PDAs), handheld devices, wireless modems, laptop computers, personal computers, computers that have been customized for implementing educational teaching tasks, etc.

The first input potentially includes various forms of data, such as text descriptions, lesson topics, educational goals, at least one learning objective, or specific teaching points. Optionally, the first input is received via an interaction interface of the first user device. Herein, the interaction interface relates a structured set of user interface elements rendered on a display screen of the first user device. Optionally, the interaction interface rendered on the display screen is generated by any collection or set of instructions executable by an associated digital system. Additionally, the interaction interface is operable to interact with the user to convey graphical and/or textual information and receive input from the user; it will be appreciated that "A and/or B" means either A or B, or both A and B. The first input is received to enable initial creation of an idea to generate the lesson. A technical effect of receiving the first input is that it provides the user with a choice in lesson planning direction, promotes creativity while planning and/or creating the lesson, and encourages diversity in teaching strategies.

The NLP algorithm interprets the first input to understand a scope and educational context. In this regard, the NLP algorithm processes the first input to understand at least one of: a language, a context, and an intent, behind provision of such first input from the first user device, by performing at least one of: a syntactic analysis, a semantic analysis, of the first input. Subsequently, the NLP algorithm then breaks down the first input into manageable components (for example, such as sentences, phrases, keywords, and the like). These manageable components are then analysed by the NLP algorithm to identify that least one lesson objective (for example, such as a key educational goal) that is aimed to be achieved with the lesson. Herein, the term "*lesson objective*" refers to a clearly defined educational goal that the lesson, which is generated, aims to achieve. As a first example, if the first input specifies "teaching basic algebra concepts" the NLP algorithm extracts "basic algebra concepts" as the at least one lesson objective.

Moreover, the NLP algorithm cross-references the identified at least one objective with a database of curriculum standards to determine which curriculum aligns with the intended lesson. Herein, the term "*curriculum*" refers to a structured framework that outlines the at least one lesson objective, educational content, and instructional methodologies to be followed over a course of studying the lesson. Optionally, the curriculum comprises at least one of: a subject, a topic, a learning objective, an educational standard, an educational guideline, at least one assessment method, at least one instructional material. As a second example, if the first input relates to "basic algebra" the NLP algorithm matches this with the relevant mathematics educational guideline for an appropriate grade level.

Moreover, the NLP algorithm may also consider additional contextual information provided in the first input, such as the grade level, subject area, or specific curriculum requirements. This helps in fine-tuning an alignment of the lesson to correct standards of the curriculum.

A technical effect of interpreting the first input in such a manner is that it automates the process of analysing and understanding the first input, by ensuring that the at least one lesson objective that is identified is clear and precisely matched to appropriate standards of the curriculum. This saves time and effort considerably. Moreover, a high level of consistency is maintained when generating the lesson in such a manner, as the lesson which is finally generated adheres to guidelines of the curriculum and the at least one lesson objective.

Optionally, the at least one lesson objective comprises at least one of: a title, a topic, a sub-topic, for the lesson. Herein, the term "*title*" refers to a brief, descriptive name for the lesson that encapsulates its main focus or a theme thereof. The term "*topic*" refers to a primary subject matter or area of learning that the lesson will cover. The term "*sub-topic*" refers to specific aspects or subdivisions of the (main) topic that the lesson will address in detail. A technical effect of the aforementioned is that a structured framework is provided for the lesson content that will be generated. This helps in organizing the lesson in a logical and coherent manner. Another technical effect of the aforementioned is that it ensures that the lesson is focused and comprehensive, covering all necessary aspects of the at least one lesson objective. Moreover, upon clearly defining the at least one objective, the NLP algorithm is able to efficiently parse and process the first input data, thus speeding up the generation of the lesson.

Throughout the present disclosure, the term "*data repository*" refers to hardware, software, firmware, or a combination of these for storing the reference standard of the curriculum and the plurality of reference curriculum standards in an organized (namely, structured) manner, thereby, allowing for easy storage, access (namely, retrieval), updating and analysis when mapping the at least one lesson objective with the reference standard of the curriculum. The first data repository comprises the plurality of reference curriculum standards of at least one curriculum, wherein the term "*reference curriculum standard*" refers to a specific educational benchmark and/or a specific educational criterion that defines expected knowledge, skills, and competencies that are expected. Herein, the plurality of reference curriculum standards serves as points of references for aligning the at least one lesson objective. In this regard, the first data repository is capable of supporting or more curriculums, each curriculum potentially having its own plurality of reference curriculum standards. The first data repository may be implemented as a local memory (i.e., a memory of the first user device), a removable memory, a cloud-based memory, or similar. The first data repository may optionally be implemented as one or more data storage devices. A technical advantage of using the data repository is that it provides an ease of storage and access of processing the reference standard of the curriculum. Herein, the reference standard can have one or more end results.

Optionally, a mapping algorithm is used to map the at least one lesson objective with the reference standard of the curriculum, wherein the mapping algorithm comprises at least one of: a pattern matching algorithm, a contextual analysis algorithm, a semantic matching algorithm. Herein, the pattern matching algorithm is used to identify patterns and/or keywords in the at least one lesson objective that match those with the reference standard of the curriculum. The contextual analysis algorithm is used to understand a context of the at least one lesson objective to ensure accurate alignment with relevant the reference standard of the curriculum. The semantic matching algorithm is used to match a meaning and/or an intent of the at least one lesson objective with corresponding reference standard of the curriculum.

A technical effect of mapping the at least one lesson objective with the reference standard of the curriculum in such a manner is that it helps to properly align the lesson, that will be generated, in achieving learning outcomes, by providing structured and focused instruction. Such instruction facilitates meeting specific goals set by the curriculum. Another technical effect is that it reduces a manual effort required by the user to align their lessons with the reference standard of the curriculum, which allows the user to focus more on teaching and interacting with students.

For example, in Curriculum X, a reference standard for algebra in class 6 would be that a student is able to solve a linear equation in one variable, and be able to graphically plot a linear equation in one variable.

Throughout the present disclosure, the term "*lesson plan*" refers to a framework or an outline of the lesson. However, the lesson plan does not include the lesson content. The lesson plan comprises a plurality of section headers and their corresponding descriptions elaborating what would be covered under the section headers. These section headers are required to be populated with the lesson content. For example, some section headers may be, Keywords, Topics, Reference course materials, Evaluation, Lab-work, etc. Moreover, the plurality of lesson plans is generated to be different from each other, by varying at least one of: themes, pedagogical approaches, difficulty (or complexity) levels.

In this regard, the plurality of lesson plans is generated by using the at least one AI model, wherein based on functionality, training needs, etc. there could be one or more AI models. Optionally, the at least one AI model comprises at least one of: a machine learning algorithm, a rulebased algorithm. Herein, the at least one AI model uses patterns learnt to create the plurality of lesson plans, and adjust content and structure of each lesson plan to meet the at least one learning objective. Herein, the at least one AI model is optionally an AI Application Programming Interface (API), which uses machine leaning models that are pre-trained on diverse datasets. The at least one AI model are adept at understanding the first input which is interpreted using the NLP algorithm, and generating the plurality of lesson plans that aligns with the first input. In particular, the API is used with a prompt that goes through a large language model (LLM) to generate each lesson plan from amongst the plurality of lesson plans. As an example, the plurality of lesson plans may comprise creating quiz questions, generating slides, integrating multimedia.

A technical effect of generating the plurality of lesson plans in such a manner is that it enables generation of diverse and creative ideas for generating the plurality of lesson plans from the first input, which provides a significant advancement over more manual or less sophisticated automated systems. Another technical effect is that such generation of the plurality of lesson plans reduces a manual workload on the user, thus freeing up the user's time for other education-related activities.

Optionally, the plurality of lesson plans comprise 2-10 lesson plans. The plurality of lesson plans may for example, comprise 2, 3, 5, or 7 lesson plans up to 4, 8, 9, 10 lesson plans. Such a range of lesson plans in the plurality of lesson plans provides the user associated with the first user device with a variety of options from which to choose, allowing them to select a lesson plan that best fits the at least one lesson objective. A technical effect of such range of the plurality of lesson plans is that there is offered flexibility to the user, which enables to user to have different approaches, activities, and content structures for the at least one lesson objective.

The first feedback is provided from the first user device associated with the user via the interaction interface. This happens prior to generating the lesson content, wherein options are provided from amongst the plurality of lesson plans that align with the reference standard of the curriculum, and optionally prompts are provided to the user. Herein, the term "*feedback*" refers to a response provided by the user, wherein the first feedback relates to an initial set of response provided by the user regarding the plurality of lesson plans that were generated. Optionally, the first feedback further pertains to at least one of: request modifications, request clarifications, request new lesson plans, comments on the selected lesson plan, ratings on the selected lesson plan, alignment of the selected lesson plan with the at least one lesson objective, suggestion of improvements or adjustments needed in the selected lesson plan. The first feedback relates to why a particular lesson plan was selected, what elements were effective, and whether any issues were encountered. A technical effect of providing the first feedback is that it allows the at least one AI model to understand preferences and requirements of the user associated with the first user device, which is then used to improve generation of the plurality of lesson plans. Another technical effect is that it is used to customize the selected lesson plan to meet requirements, thus ensuring continuous improvement of generating the plurality of lesson plans.

Optionally, the first feedback also pertains to at least one of: a modification required in one or more lesson plans, a request for a clarification of a section header in one or more lesson plans, a request for generating a new set of lesson plans which satisfy the at least one lesson objective and align with the reference standard of the curriculum. When the first feedback pertains to the modification required in the one or more lesson plans, the modification may optionally involve at least one: an adjustment to the lesson plan selected to better align with the at least one lesson objective, enhancements to ensure better alignment with the reference standard of the curriculum. When the first feedback pertains to the request for the clarification of the section header in the one or more lesson plans, explanation and/or additional information may be optionally sought by the first user device. This is used to clarify a purpose or a content of a particular section under the section header, and/or provide detailed instructions or context for certain parts of the one or more lesson plan. When the feedback pertains to the request for generating the new set of lesson plans, it can be due at least one of the following reasons: initial set of the one or more lesson plans does not fully meet the at least one lesson objective, there is a requirement for alternative approach or additional options, better alignment of the lesson plan needs to be ensured with updated reference standard of the curriculum. A technical effect of such first feedback is that it ensures that the one or more lesson plans are highly relevant and effective for specific needs of the user, and enhances an overall quality and usability of the one or more lesson plans. Another technical effect is that a feedback loop is created with the at least one AI model which allows for a dynamic and interactive process of generating the plurality of lesson plans, thus ensuring that the lesson content to be generated is highly customized and approved by the user associated with the first user device.

The lesson content is generated by taking into account educational resources and teaching methodologies with which the at least one AI model is pre-trained. Examples of the educational resources may include, but are not limited to, textbooks, scholarly articles, and educational websites. Subsequently, the at least one AI model generates at least a descriptive and instructional text as a part of the lesson content. Herein, the lesson content that is generated aligns with the at least one lesson objective and with the reference standard of the curriculum. Herein, the term "*lesson content*" refer to instructional materials that align with the lesson plan that is selected. This offers a complete solution for generating the lesson. This ensures that the lesson is both effective and efficient, which saves time for the user while maintaining high educational standards.

Optionally, the lesson content comprises at least one of: keywords, a quiz, a descriptive text, a summary text, an image, a multimedia content, a graphical representation, a digital document, a link to a digital document, an interactive learning tool, a link to an interactive learning tool, that corresponds to the at least one lesson objective and the reference standard of the curriculum. A technical effect of the above is that the lesson content is that it ensures diversity and relevance, thereby making the lesson content information-rich. Moreover, such information-rich lesson content is also interactive in nature, which enhances reception rates and retention of the students.

The keywords are generated for refining the lesson content, which ensures that they are directly related to the at least one lesson objective and the reference standard of the curriculum. The quiz is created to assess understanding of the at least one lesson objective, alignment with the reference standard of the curriculum, and the lesson plan. Herein, the quiz comprises at least one of: one-word answers, multiple choice questions, subjective questions, match the following, fill in the blanks, and similar. The descriptive text provides detailed description of the lesson content, to provide in-depth information. The summary text provides a concise overview of the lesson content, wherein said summary text comprises key features. The image provides visual aids (for example, such as photographs, diagrams, illustrations) that support the lesson content and enhances understanding of the lesson content. The multimedia content provides dynamic ways to present information to add depth to the lesson content, wherein the multimedia content is seamlessly integrated into the lesson content from a proprietary library. A technical effect of the lesson content comprising the multimedia content is that it enhances engagement and comprehension of the student by providing learning materials that are assorted, thereby catering to different learning styles of the student. Examples of the multimedia content may include, but are not limited to, audio, audio-video, video, and gifs. The graphical representation provides visual representation of the information and concepts, which is useful in illustrating complex ideas. Examples of the graphical representation may include, but are not limited to, bar graphs, pie chart, and similar. The term "*digital document*" refers to electronic documents that contain relevant information and resources, pertaining to the lesson content. A technical effect of the lesson content comprising the digital document is that there is facilitation of easy access, distribution, interaction, and collaboration. Moreover, the digital document can be updated in real-time, which results in improved engagement, easier customization of the lesson content, and efficient dissemination of information.

Moreover, the term "*link*" related to a reference (namely, a hyperlink) that provides direction to another location. The link to the digital document relates to hyperlinks directing to the digital documents, when the digital documents are stored online. The link is typically displayed as any one of: a text, an image, a button, which is often highlighted or underlined to indicate its clickable nature. Herein, said link is present in the same digital document, or in an entirely different digital document.

When the weblink is clicked, a navigation action is triggered to open the digital document. A technical effect of the lesson content comprising the link to the digital document is that it facilitates immediate access to the digital document, thus ensuring that the student can easily retrieve and reference additional information.

Moreover, the term "*interactive learning tool*" refers to any one of: an online tool, a software tool to allow active engagement with the lesson content through interactive activities. Herein, the interactive learning tool is a hands-on learning experience, which often provides immediate feedback. A technical effect of the lesson content comprising the interactive learning tool is that it enables active participation of the student. This enhances an engagement of the student and promotes experiential learning, which leads to improved understanding and retention of the lesson content by the student. The lesson content comprises the link to the interactive learning tool, which relates to hyperlinks directing to the interactive learning tool available online. A technical effect of the lesson content comprising the link to the interactive learning tool is that there is provision of immediate access to the interactive learning tool, without adding too much information in the lesson content.

Hence, the lesson content is customized to meet the at least one lesson objective and align with the reference standard of the curriculum, to ensure relevance and effectiveness.

When the lesson content comprises the multimedia content, the at least one AI model uses the NLP algorithm to analyse text descriptions of the multimedia content, match the text descriptions with the at least one lesson objective, and select the multimedia content that is relevant. In this regard, the text descriptions of the multimedia content are analysed by a keyword search. Subsequently, the text descriptions are categorized by at least one filter, for example, such as, an age, a type, of video, and similar.

Optionally, the interactive learning tool comprises at least one of: a virtual laboratory, a simulation tool, an interactive game, an interactive digital flashcard, an augmented reality (AR) laboratory, an interactive whiteboard, an interactive e-book, an adaptive learning tool. The constituents of the interactive learning tool are embedded into lesson plan by integrating them as the link to the interactive learning tool, or optionally as a widget, a learning management system, and similar. Herein, the term "*virtual laboratory*" refers to a simulated environment of a physical laboratory, wherein experiments may beneficially be conducted and/or scientific procedures may beneficially be practiced without equipment from the physical laboratory. The term "*simulation tool*" refers to a software that mimics real-world processes or real-world systems in a controlled virtual environment. The term "*interactive game*" refers to a digital game designed for educational purposes, which promotes learning through play and/or interactive challenges. The term "*interactive digital flashcard*" refers a digital version of physical flashcards that is used for testing and/or improving memory through practiced retrieval of the information. The term "*augmented reality laboratory*" refers to an overlay of digital information and interactive elements onto a real-world environment. This is used to create immersive educational experiences. The term "*interactive whiteboard*" refers to a digital whiteboard that is touch-sensitive, which is used to provide the lesson content in an interactive manner, wherein the first user can at least one of: write, draw, manipulate elements. The term "*interactive e-book*" refers to an electronic book comprising interactive features (for example, such as, the multimedia content, the quiz, annotations, links, and so forth). The term "*adaptive learning tool*" refers to a digital tool that personalizes a learning experience of a student based on individual performance of the student and learning pace. Herein, at least one of: an algorithm, data analytics are employed to adjust a difficulty and the lesson content in real-time. A technical effect of such interactive learning tools is that it enhances engagement through interactive and immersive experiences, and expands learning opportunities beyond conventional classroom setting.

Optionally, the method further comprises:
providing prompts to a user, at the first user device, for obtaining a personalized setting for the lesson; and
receiving a second input from the first user device, wherein the second input comprises the personalized setting, wherein the second input is utilised by the at least one AI model at the step of generating the lesson content.

In this regard, the prompts are provided to the user at the first user device via the interactive interface. The prompts may optionally be provided any time at the first user device, or may optionally be present throughout the generation of the lesson. However, the second input received from the first user device upon provision of such prompt is utilised by the at least one AI model at the step of generating the lesson content. Herein, the prompt is provided as any one of: at least one question, at least one request, to gather specific references and requirements for customizing the lesson content. The provision of the prompts provides an interactive component of requesting and integrating changes in the lesson content, which enhances an engagement of the user, thus leading to generating the lesson content that is effective and based on the personalized setting. Optionally, the personalized setting of the lesson comprises at least one of: a preferred pedagogical approach, a preferred style, a difficulty level, a content focus, a size, a language, of the lesson.

Moreover, the specific references and requirements are provided as the second input as a response to the prompt. The second input is provided from the first user device that provides the prompts to the user. Herein, the second input is used to iterate and/or refine the lesson content. The second input can include a difficulty level of the lesson content, focus areas in the lesson content, preferred teaching methods, specific topics to emphasize upon, which allows to customize the lesson content accordingly. Herein, the at least one AI model is used to process the second input, which influences the step of generating the lesson content. Such influence is used to align the lesson content to match the second input. A technical effect of providing the second input in such a manner is that it enables the user to influence a direction of generating the lesson content to align with their unique teaching styles and specific needs of the students.

The second feedback is provided by the user with respect to the lesson content that has been generated. In this regard, the user has had an opportunity to review the plurality of lesson plans, and one of: approve, make edits, if required. The second feedback facilitates an iterative process of refining ideas for generation of the lesson content, thus leading to an effective and personalized generation of the lesson content. When the second feedback pertains to the approval of the lesson, it means that the user provides a confirmation that the lesson meets their requirements and is ready for use. When the second feedback pertains to the edit required in the lesson, it means that the user provides suggestions or requests for modifying the lesson content. This indicates that the lesson needs adjustments to better align with expectations and/or requirements of the user. The at least one AI model receives the second feedback and uses said second feedback to approve or further refine the lesson content. The at least one second user device is associated with at least one student. The lesson is finalized for delivery when the user approves of the lesson. Such approval can be provided directly in the second feedback, or can be provided after the edits required have been implemented.

Optionally, the step of finalizing the lesson comprises:
preparing the lesson for delivery, when the second feedback pertains to the approval of the lesson; or
implementing the edit required in the lesson and preparing the edited lesson for delivery, when the second feedback pertains to the edit required in the lesson.

When the second feedback pertains to the approval of the lesson, it indicates that the user is satisfied with the lesson, and said lesson requires no further changes. The second feedback confirms that the lesson meets standards and expectations of the user, aligns with the at least one lesson objective and the reference standard of the curriculum, and can be delivered to the at least one second user device as is. When the second feedback pertains to the edit required in the lesson, it indicates that certain modifications are to be made to the lesson content. Herein, the modifications may include, but are not limited to, revising of the lesson content, updating the lesson content, adjusting a structure of the lesson, and similar. Upon implementing the edits, the lesson is then prepared for delivery to the at least one second user device. In this regard, the at least one AI model employs a machine learning technique (for example, such as pattern recognition technique) and adapt the lesson based on the second input received from the first user device. Such machine learning techniques are well-known in the art.

A technical effect of finalizing the lesson in such a manner is that the lesson content can flexibly adapt based on the second feedback, ensuring that the lesson is continuously improved and refined.

Optionally, the method further comprises:
receiving at least one of: a third feedback, lesson progress data, lesson efficacy data, from the at least one second user device; and
dynamically updating at least the lesson content based on the at least one of: the third feedback, the lesson progress data, the lesson efficacy data.

Optionally, the third feedback comprises at least one of: a rating of the lesson, comments about the lesson, suggestions about the lesson. Optionally, the lesson progress data provides information regarding how much of the lesson is completed. In other words, the lesson progress data provides information regarding usage of the lesson content over time. The lesson progress data is in a form of percentage, a number of section headers completed, or similar. Optionally, the lesson efficacy data provides data indicating how effective the lesson was. In this regard, at least one of: the third feedback, formative assessments (for example, such as quizzes), summative assessments (for example, such as tests, exams, and similar), marks received from teacher, grades received from teacher, teacher observations, peer observations, the lesson progress data, is used to determine the lesson efficacy data. In this regard, at least one of: the third feedback, formative assessments (for example, such as quizzes), summative assessments (for example, such as tests, exams, and similar), marks received from teacher, grades received from teacher, teacher observations, peer observations, the lesson progress data, are recorded and optionally stored in first data repository. Herein, statistical tools may optionally be used for analysis in order to identify patterns, and draw conclusions about an effectiveness of the lesson. Examples of the lesson efficacy data may include, but are not limited to, a score obtained in a quiz in the lesson, an input affirming efficacy of the lesson.

The at least one second user device is used to interact with the lesson content to generate the at least one of: a third feedback, lesson progress data, lesson efficacy data, which is provided to the first user device. Subsequently, the lesson content is updated in real time or near-real time, wherein such updates occur automatically, without a need for manual intervention. In some instances, the lesson plan may also be updated based on the at least one of: the third feedback, the lesson progress data, the lesson efficacy data. In this regard, at least one of: the third feedback, the lesson progress data, the lesson efficacy data, is indirectly provided as input to the at least one AI model. Moreover, capabilities of the at least one AI model are leveraged to regenerate the lesson content based on at least one of: the third feedback, the lesson progress data, the lesson efficacy data. In this regard, the user associated with the first user device may optionally make changes in the lesson content. A technical effect of dynamically updating at least the lesson content in such a manner is that it allows for adaptability while dynamically generating the lesson content, which enhances personalized learning experience of the student.

Optionally, the method further comprises:
generating an augmented training dataset comprising a new educational resource and/or a new teaching methodology for which the at least one AI model is to be trained; and
training the at least one AI model using the augmented training dataset.

In this regard, the at least one AI model continuously updates itself to include latest educational resource and/or latest teaching methodology. When there is continued training of the at least one AI model based on the new educational resource, it results in generating improved lesson content. Herein, the term "*new educational resource*" refers to additional materials that are used to enrich the augmented training dataset. When there is continued training of the at least one AI model based on the new teaching methodology, it results in generating improved lesson plans. The term "*new teaching methodology*" refers to new instructional strategies or pedagogical approaches to broaden the training of the at least one AI model. The term "*augmented training dataset*" provides a comprehensive representation of educational content and/or instructional techniques.

Subsequently, the at least one AI model undergoes training using the augmented training dataset, wherein the at least one AI model is trained to recognize patterns and make predictions based on the augmented training dataset. A technical effect of training the at least one AI model in such a manner is that it improves an accuracy, robustness, and effectiveness in generating the lesson content, as the at least one AI model is exposed to a wide range of educational resources and/or teaching methodologies. Hence, the at least one AI model is able to generalize and adapt to diverse scenarios of learning. A technical effect of introducing the new educational resource and/or the new teaching methodology to generate the augmented training dataset is that it facilitates mitigation of bias and is used to fill gaps in existing training data.

Optionally, the method further comprises sharing the lesson that is generated with at least one third user device. Herein, the third user device may optionally be a device of another teacher, or a curriculum expert. In this regard, the first user device and the at least one third user device interact with each other for sharing the lesson, data, teaching strategies, etc. to ensure that they all adhere to mutually same standards of the national curriculum. Herein, by communicating and sharing such information, their teaching strategies may beneficially be thereby harmonized. This means that irrespective of a device (i.e., the first device or the at least one third device) used, the lesson content will remain consistent. Herein, the first user device and the at least one third user device may optionally be designed to function together within a communication network. Such communication network allows exchange of information between the first user device and the at least one third user device. Hence, the lesson is shared in a wireless manner. Examples of the communication network may include, but are not limited to, Local Area Networks (LANs), Wide Area Networks (WANs), Metropolitan Area Networks (MANs), the Internet, radio networks (such as Bluetooth^{®}, NFC^{®}), telecommunication networks. A technical effect of sharing the lesson in such a manner is that it facilitates sharing the lesson and collaboration among the first user device and the at least one third user device, which maintains uniform teaching standards across different classes, schools, and/or regions.

The present disclosure also relates to the second aspect as described above. Various embodiments and variants disclosed above, with respect to the aforementioned first aspect, apply *mutatis mutandis* to the second aspect.

The term "*computer program product*" refers to a software product comprising program instructions that are recorded on the non-transitory machine-readable data storage medium, wherein the software product is executable upon a computing hardware for implementing the aforementioned steps of the method for automatically detecting cross-connected cells in a communication network.

In an embodiment, the non-transitory machine-readable date storage medium may optionally direct a machine (such as computer, other programmable data processing apparatus, or other devices) to function in a particular manner, such that the program instructions stored in the non-transitory machine-readable data storage medium case a series of steps to implement the function specified in a flowchart corresponding to the instructions. Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

The present disclosure also relates to the third aspect as described above. Various embodiments and variants disclosed above, with respect to the aforementioned first aspect, apply *mutatis mutandis* to the third aspect.

### DETAILED DESCRIPTION OF THE DRAWINGS

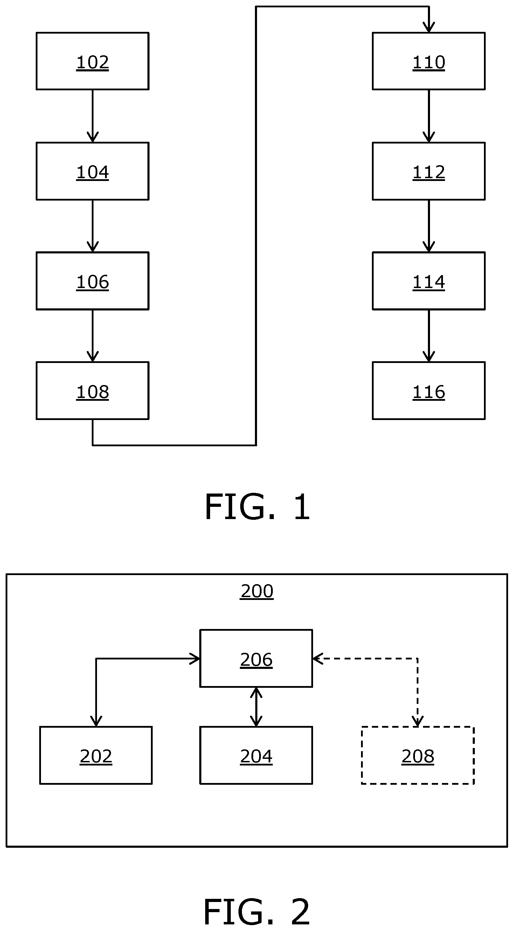

Referring to FIG. 1, there is shown an illustration of steps of a method for (namely, a method of) Artificial Intelligence (AI)-driven educational lesson generation, according to an embodiment of the present disclosure. At a step **102**, a first input is received from a first user device, wherein a lesson is to be created based on the first input. At a step **104**, the first input is interpreted using at least one natural language processing (NPL) algorithm to identify at least one lesson objective and a curriculum to which the lesson should align. At a step **106**, the at least one lesson objective is mapped with a reference standard of the curriculum that is pre-stored at a first data repository, wherein the data repository has pre-stored thereat a plurality of reference curriculum standards of at least one curriculum. At a step **108**, a plurality of lesson plans are generated which satisfy the at least one lesson objective and align with the reference standard of the curriculum, using at least one AI model. At a step **110**, a first feedback pertaining to at least a selection of a lesson plan is received from amongst the plurality of lesson plans, from the first user device. At a step **112**, a lesson content is generated for the lesson plan that is selected, using the at least one AI model, wherein the lesson content and the lesson plan collectively constitute the lesson. At a step **114**, a second feedback is received pertaining to the lesson from the first user device, wherein the second feedback pertains to one of: an approval of the lesson, or an edit required in the lesson. At a step **116**, the lesson is finalized for delivery to at least one second user device, based on the second feedback.

The aforementioned steps are only illustrative and other alternatives may optionally also be provided where one or more steps are added, one or more steps are removed, or one or more steps are provided in a different sequence without departing from the scope of the claims herein.

Referring next to FIG. 2, there is shown an illustration of a block diagram of a system **200** for Artificial Intelligence (AI)-driven educational lesson generation, according to an embodiment of the present disclosure. The system **200** comprises a first user device **202**, at least one second user device (depicted as a second user device **204**), at least one processor (depicted as a processor **206**), and optionally a first data repository **208**. The processor **206** is communicably coupled to the first user device **202**, and to the second user device **204**, and optionally to the first data repository **208**.

It may be understood by a person skilled in the art that the FIG. 2 includes a simplified architecture of a system **200** for sake of clarity, which should not unduly limit the scope of the claims herein. The person skilled in the art will recognize many variations, alternatives, and modifications of embodiments of the present disclosure.

## Claims

1. A method for Artificial Intelligence (AI)-driven educational lesson generation, the method comprising:
receiving a first input from a first user device (202), wherein a lesson is to be created based on the first input;
interpreting the first input using at least one natural language processing (NPL) algorithm to identify at least one lesson objective and a curriculum to which the lesson should align;
mapping the at least one lesson objective with a reference standard of the curriculum that is pre-stored at a first data repository (208), wherein the first data repository has pre-stored thereat a plurality of reference curriculum standards of at least one curriculum;
generating a plurality of lesson plans which satisfy the at least one lesson objective and align with the reference standard of the curriculum, using at least one AI model;
receiving a first feedback pertaining to at least a selection of a lesson plan from amongst the plurality of lesson plans, from the first user device;
generating a lesson content for the lesson plan that is selected, using the at least one AI model, wherein the lesson content and the lesson plan collectively constitute the lesson;
receiving a second feedback pertaining to the lesson from the first user device, wherein the second feedback pertains to one of: an approval of the lesson, or an edit required in the lesson; and
finalizing the lesson for delivery to at least one second user device (204), based on the second feedback.

2. A method according to claim 1, further comprising:
providing prompts to a user, at the first user device (202), for obtaining a personalized setting for the lesson; and
receiving a second input from the first user device, wherein the second input comprises the personalized setting, wherein the second input is utilised by the at least one AI model at the step of generating the lesson content.

3. A method according to any one of the preceding claims, further comprising:
receiving at least one of: a third feedback, lesson progress data, lesson efficacy data, from the at least one second user device (204); and
dynamically updating at least the lesson content based on the at least one of: the third feedback, the lesson progress data, the lesson efficacy data.

4. A method according to any one of the preceding claims, further comprising:
generating an augmented training dataset comprising a new educational resource and/or a new teaching methodology for which the at least one AI model is to be trained; and
training the at least one AI model using the augmented training dataset.

5. A method according to any one of the preceding claims, wherein the at least one lesson objective comprises at least one of: a title, a topic, a sub-topic, for the lesson.

6. A method according to any one of the preceding claims, wherein the plurality of lesson plans comprise in a range of 2 to 10 lesson plans.

7. A method according to any one of the preceding claims, wherein the first feedback also pertains to at least one of: a modification required in one or more lesson plans, a request for a clarification of a section header in one or more lesson plans, a request for generating a new set of lesson plans which satisfy the at least one lesson objective and align with the reference standard of the curriculum.

8. A method according to any one of the preceding claims, wherein the lesson content comprises at least one of: keywords, a quiz, a descriptive text, a summary text, an image, a multimedia content, a graphical representation, a digital document, a link to a digital document, an interactive learning tool, a link to an interactive learning tool, that corresponds to the at least one lesson objective and the reference standard of the curriculum.

9. A method according to claim 8, wherein the interactive learning tool comprises at least one of: a virtual laboratory, a simulation tool, an interactive game, an interactive digital flashcard, an augmented reality (AR) laboratory, an interactive whiteboard, an interactive e-book, an adaptive learning tool.

10. A method according to any one of the preceding claims, further comprising sharing the lesson that is generated with at least one third user device.

11. A method according to any one of the preceding claims, wherein the step of finalizing the lesson comprises:
preparing the lesson for delivery, when the second feedback pertains to the approval of the lesson; or
implementing the edit required in the lesson and preparing the edited lesson for delivery, when the second feedback pertains to the edit required in the lesson.

12. A computer program product comprising a non-transitory machine-readable data storage medium having stored thereon program instructions that, when accessed by a processing device, cause the processing device to execute steps of a method of any one of claims 1 to 11.

13. A system (200) for implementing Artificial Intelligence (AI)-driven educational lesson generation, the system comprising at least one processor (206) communicably coupled to a first user device (202), at least one second user device (204), and a first data repository (208), wherein the at least one processor is configured to:
receive a first input from a first user device, wherein a lesson is to be created based on the first input;
interpret the first input using at least one natural language processing (NPL) algorithm to identify at least one lesson objective and a curriculum to which the lesson should align;
map the at least one lesson objective with a reference standard of the curriculum that is pre-stored at the first data repository, wherein the first data repository has pre-stored thereat a plurality of reference curriculum standards of at least one curriculum;
generate a plurality of lesson plans which satisfy the at least one lesson objective and align with the reference standard of the curriculum, using at least one AI model;
receive a first feedback pertaining to at least a selection of a lesson plan from amongst the plurality of lesson plans, from the first user device;
generate a lesson content for the lesson plan that is selected, using the at least one AI model, wherein the lesson content and the lesson plan collectively constitute the lesson;
receive a second feedback pertaining to the lesson from the first user device, wherein the second feedback pertains to one of: an approval of the lesson, or an edit required in the lesson; and
finalize the lesson for delivery to at least one second user device, based on the second feedback.

14. A system according to claim 13, further comprising the first data repository (208).
